(19) Europäisches Patentamt
European Patent Office
Office européen des brevets

(11) EP 3 029 406 B1

(12) **EUROPEAN PATENT SPECIFICATION**

(45) Date of publication and mention
of the grant of the patent:
**21.02.2018 Bulletin 2018/08**

(51) Int Cl.:
*F28F 3/08* (2006.01)     *F17C 5/06* (2006.01)
*F17C 13/00* (2006.01)    *H01M 8/06* (2016.01)
*F28F 7/02* (2006.01)     *F28D 9/00* (2006.01)
*F02M 21/02* (2006.01)    *H01M 8/04007* (2016.01)

(21) Application number: **14831952.8**

(22) Date of filing: **17.07.2014**

(86) International application number:
**PCT/JP2014/069030**

(87) International publication number:
**WO 2015/016076 (05.02.2015 Gazette 2015/05)**

(54) **HYDROGEN GAS COOLING METHOD AND HYDROGEN GAS COOLING SYSTEM**

WASSERSTOFFGASKÜHLVERFAHREN UND WASSERSTOFFGASKÜHLSYSTEM

PROCÉDÉ DE REFROIDISSEMENT D'HYDROGÈNE GAZEUX ET SYSTÈME DE
REFROIDISSEMENT D'HYDROGÈNE GAZEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2013 JP 2013159513**

(43) Date of publication of application:
**08.06.2016 Bulletin 2016/23**

(73) Proprietor: **Kabushiki Kaisha Kobe Seiko Sho
(Kobe Steel, Ltd.)
Kobe-shi, Hyogo 651-8585 (JP)**

(72) Inventors:
• **NOISHIKI, Koji
Takasago-shi, Hyogo 676-8670 (JP)**

• **MIWA, Yasutake
Takasago-shi, Hyogo 676-8670 (JP)**
• **SHIMIZU, Kunihiko
Kobe-shi, Hyogo 657-0846 (JP)**
• **KURISHIRO, Yuji
Kobe-shi, Hyogo 657-0846 (JP)**

(74) Representative: **TBK
Bavariaring 4-6
80336 München (DE)**

(56) References cited:
WO-A1-2014/122890     JP-A- 2003 336 990
JP-A- 2004 116 619     JP-A- 2005 282 951
JP-A- 2008 164 177     JP-A- 2010 121 657
JP-A- 2011 080 495

## Description

TECHNICAL FIELD

The present invention relates to a hydrogen gas cooling method and a hydrogen gas cooling system.

BACKGROUND ART

In a hydrogen station in which a hydrogen gas is supplied to a fuel cell vehicle, to enhance an efficiency of filling the fuel cell vehicle with the hydrogen gas, the hydrogen gas is compressed to have a high pressure before the filling. In filling a tank of the fuel cell vehicle with this compressed hydrogen gas, a compression heat is generated in accordance with an increase of a pressure in the tank. Accordingly, to avoid a temperature increase of the tank due to the compression heat, the hydrogen gas that has been allowed to have a high pressure in the hydrogen station is cooled and then supplied to the fuel cell vehicle. Patent Documents 1 and 2 as described below disclose an example of cooling methods and cooling systems for cooling a hydrogen gas before supplying the same to a fuel cell vehicle in this manner.

In Patent Document 1 as described below, a cooling system including a heat exchanger including: a container having a filled bath in the interior; a gas flow passage; and a heat transfer medium flow passage is used. A filled layer is filled with a heat transfer medium containing metal powders. The gas flow passage and the heat transfer medium flow passage are led into the filled layer from the exterior of the container to have a spiral shape. The gas flow passage and the heat transfer medium flow passage are arranged adjacent to each other in such a manner as to lie along each other. A hydrogen gas is allowed to flow through the gas flow passage. A low-temperature heat transfer medium different from the heat transfer medium filled into the filled bath is allowed to flow through the heat transfer medium flow passage. While flowing through the gas flow passage, the hydrogen gas is subjected to heat exchange directly with the heat transfer medium flowing through the heat transfer medium flow passage, or through the heat transfer medium in the filled bath, thereby being cooled.

Moreover, in Patent Document 2 as described below, a cooling system including a heat exchanger including a dual pipe through which a hydrogen gas and a refrigerant are allowed to flow is used. In this cooling system, to improve a heat transfer efficiency, the dual pipe in which a pressure in a hydrogen supply passage and a pressure in a refrigerant supply passage are configured to be substantially the same is used. Thereby, a pipe wall of an inner pipe between both supply passages are allowed to be thin. As a result, heat transfer resistance of the heat exchanger decreases while the heat exchanger is downsized.

In a hydrogen gas cooling method disclosed in Patent Document 1 as described above, the filled bath is required to be filled with the heat transfer medium in large amount. Accordingly, an amount of use of the heat transfer medium increases. Meanwhile, since heat resistance of the heat transfer medium in large amount filled into the filled bath is large, the heat transfer medium that flows through the heat transfer medium flow passage is required to have a further low temperature to perform sufficient cooling of a hydrogen gas according to the cooling method disclosed in Patent Document 1 as described above. Accordingly, an energy required for cooling this heat transfer medium increases.

On the other hand, in a hydrogen gas cooling method disclosed in Patent Document 2 as described above, an amount of use of the refrigerant as heat transfer medium can be reduced in comparison with the cooling method disclosed in Patent Document 1 as described above. However, to increase an amount of hydrogen gas cooling treatment, for example, increasing the number of the dual pipe is required. If the number of the dual pipe increases, the heat exchanger enlarges. Moreover, Patent Document 2 as described above indicates that, to improve a heat transfer efficiency, a pressure in the hydrogen supply passage and a pressure in the refrigerant supply passage are configured to be substantially the same, whereas, in practice, when a high-pressure hydrogen gas is filled into a fuel cell vehicle, a pressure of the hydrogen gas changes every moment. Consequently, even if a pressure control of the hydrogen gas that flows through the hydrogen supply passage is performed, in practice, a pressure difference between the hydrogen supply passage and the refrigerant supply passage increases. Thus, determining a wall thickness of the pipe having a safety factor in consideration of this increased pressure difference is required. Consequently, the wall thickness of the pipe is eventually obliged to be large, and as a result, heat resistance of the pipe increases. In this case, if the refrigerant that flows through the refrigerant supply passage in an outer pipe fails to have a further low temperature, the hydrogen gas that flows through the hydrogen supply passage in the inner pipe cannot be sufficiently cooled. Accordingly, an energy required for cooling the refrigerant increases. WO-A-2014122890, which is a document falling under Art. 54(3) EPC, discloses a further hydrogen gas cooling system/ method using a brine that is a non-evaporative antifreeze.

CITATION LIST

PATENT DOCUMENTS

Patent Document 1: JP 2010-121657 A
Patent Document 2 : JP 2011-80495 A

SUMMARY OF THE INVENTION

An object of the present invention is to reduce an amount of use of a brine as a heat transfer medium that is used for cooling a hydrogen gas, and be capable of suppressing an increase of an energy required for cooling the brine and sufficiently cooling the hydrogen gas, while both downsizing a heat exchanger and ensuring an amount of hydrogen gas cooling treatment.

A hydrogen gas cooling method according to an aspect of the present invention is a hydrogen gas cooling method using a brine that is a non-evaporative antifreeze, the method including: a preparation step of preparing a heat exchanger including a stacked body in which a first layer in which a plurality of first flow passages that are fine flow passages are arranged and a second layer in which a plurality of second flow passages that are fine flow passages are arranged are stacked upon one another; and a cooling step in which a hydrogen gas is allowed to flow through each of the first flow passages while a brine having a temperature lower than the hydrogen gas is allowed to flow through each of the second flow passages to perform heat exchange between the hydrogen gas flowing through the first flow passages and the brine flowing through the second flow passages, thereby cooling the hydrogen gas, in which, in the cooling step, the hydrogen gas is allowed to flow through each of the first flow passages such that the hydrogen gas flowing through each of the first flow passages moves from one side to the other side in a particular direction orthogonal to a stacking direction of the first layer and the second layer while the brine is allowed to flow through each of the second flow passages such that the brine flowing through each of the second flow passages moves from the other side to the one side in the particular direction, and a temperature and a flow rate of the brine fed into each of the second flow passages are controlled such that the temperature of the brine at a feed-out port of the second flow passages is higher than a temperature of the hydrogen gas at a feed-out port of the first flow passages.

A hydrogen gas cooling system according to another aspect of the present invention is a hydrogen gas cooling system using a brine that is a non-evaporative antifreeze, the system including: a cooler that cools the brine; a heat exchanger that is connected to the cooler such that the brine circulates between the heat exchanger and the cooler, and allows a hydrogen gas to be subjected to heat exchange with the brine supplied from the cooler, thereby cooling the hydrogen gas; a pump that delivers the brine that has been cooled by the cooler from the cooler to the heat exchanger; and a control unit that controls a temperature of the brine, in which the heat exchanger includes a stacked body in which a first layer in which a plurality of first flow passages that are fine flow passages into which the hydrogen gas is fed and flows therethrough are arranged and a second layer in which a plurality of second flow passages that are fine flow passages into which the brine is fed and flows therethrough are arranged are stacked upon one another, and allows heat exchange between the hydrogen gas flowing through the first flow passages and the brine flowing through the second flow passages to be performed, each of the first flow passages includes a first inflow port that receives the hydrogen gas and a first feed-out port that discharges the hydrogen gas, and the first inflow port and the first feed-out port are disposed such that the hydrogen gas that is fed from the first inflow port into the first flow passages and flows through the first flow passages toward the first feed-out port moves from one side to the other side in a particular direction orthogonal to a stacking direction of the first layer and the second layer, each of the second flow passages includes a second inflow port that receives the brine and a second feed-out port that discharges the brine, and the second inflow port and the second feed-out port are disposed such that the brine that is fed from the second inflow port into the second flow passages and flows through the second flow passages toward the second feed-out port moves from the other side to the one side in the particular direction, and the control unit controls an operation of the cooler and a flow rate of the brine that the pump delivers, such that the temperature of the brine at the second feed-out port is higher than a temperature of the hydrogen gas at the first feed-out port.

BRIEF DESCRIPTION OF DRAWINGS

[Fig. 1] Fig. 1 is a diagram schematically illustrating an entire configuration of a hydrogen gas cooling system according to a first embodiment of the present invention.
[Fig. 2] Fig. 2 is a front view of a heat exchanger, as viewed from one side in a base plate stacking direction, that is used in the hydrogen gas cooling system according to the first embodiment of the present invention
[Fig. 3] Fig. 3 is a side view of the heat exchanger illustrated in Fig. 2 as viewed from the right side in Fig. 2.
[Fig. 4] Fig. 4 is a partial cross-sectional view of a stacked body of the heat exchanger illustrated in Fig. 3.
[Fig. 5] Fig. 5 is a schematic plan view of a first base plate that forms a first flow passage in the stacked body of the heat exchanger illustrated in Fig. 3.
[Fig. 6] Fig. 6 is a schematic plan view of a second base plate that forms second flow passages in the stacked body of the heat exchanger illustrated in Fig. 3.

DESCRIPTION OF EMBODIMENTS

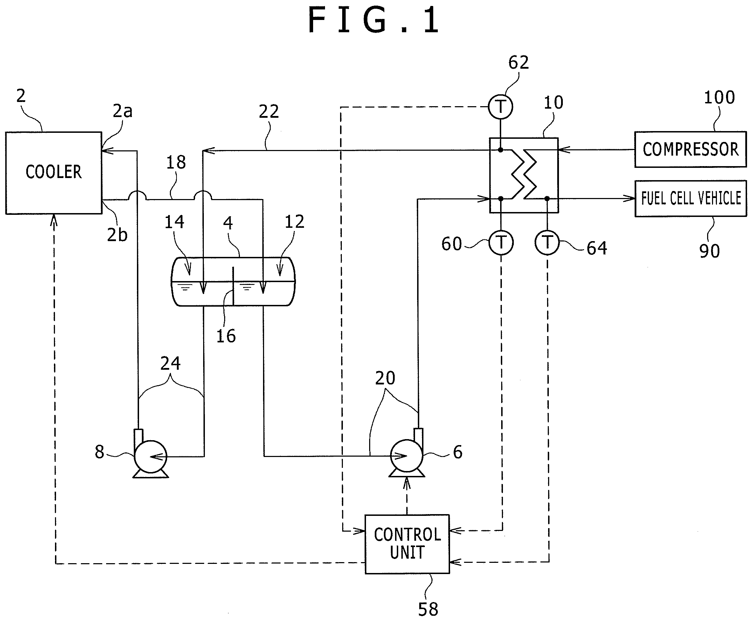

Hereinafter, embodiments of the present invention will be described with reference to the drawings.
First, a configuration of a cooling system that is used for a hydrogen gas cooling method according to an embodiment of the present invention with reference to Figs. 1-6.

This cooling system is used, for example, for cooling a hydrogen gas that is supplied to a fuel cell vehicle 90 (see Fig. 1) in a hydrogen station. In the hydrogen station, to enhance an efficiency of filling the fuel cell vehicle 90 with the hydrogen gas, the hydrogen gas is compressed to have a high pressure and then supplied to the fuel cell vehicle 90. In accordance with this compression of the hydrogen gas, a compression heat is generated. To avoid a temperature increase of the hydrogen gas due to this compression heat, the cooling system according to this embodiment is to cool the compressed high-pressure hydrogen gas to a low temperature before filling the fuel cell vehicle 90 with the same.

The cooling system according to this embodiment includes, as illustrated in Fig. 1, a cooler 2, a tank 4, a first pump 6, a second pump 8, a heat exchanger 10, a control unit 58, a second inflow port temperature detection portion 60, a second feed-out port temperature detection portion 62, and a first feed-out port temperature detection portion 64.

The cooler 2 is a device for cooling a brine. The cooler 2 is configured to be capable of changing a cooling power to cool the brine. The cooler 2 receives a control signal from the control unit 58 as described below. The cooler 2 changes the cooling power in accordance with the received control signal. In other words, when the received control signal indicates an increase of the cooling power, the cooler 2 increases the cooling power in accordance with this indication, while, when the received control signal indicates a decrease of the cooling power, the cooler 2 decreases the cooling power in accordance with this indication. The brine is a non-evaporative antifreeze. As the brine, for example, an ethylene glycol solution, a fluorinated liquid, or the like, may be used.

The cooler 2 includes a feeding portion 2a and a discharge portion 2b. The feeding portion 2a is a portion into which the brine that has been subjected to heat exchange with the hydrogen gas in the heat exchanger 10 so as to have an increased temperature is fed. The discharge portion 2b is a portion for discharging the brine that has been cooled by the cooler 2. The cooler 2 allows the brine that has been fed from the feeding portion 2a into the cooler 2 to be subjected to heat exchange with a refrigerant, such as a low-temperature hydrochlorofluorocarbon, thereby cooling the brine. The cooler 2 discharges the cooled brine from the discharge portion 2b. The cooler 2 is configured to be capable of changing a temperature of the refrigerant. The cooler 2 changes the temperature of the refrigerant, thereby changing the cooling power for cooling the brine. In other words, when the control signal that has been received from the control unit 58 indicates an increase of the cooling power, the cooler 2 decreases the temperature of the refrigerant to increase the cooling power, while, when the control signal that has been received from the control unit 58 indicates a decrease of the cooling power, the cooler 2 increases the temperature of the refrigerant to decrease the cooling power. The brine at, for example, -30°C is fed into the cooler 2. The cooler 2 cools the brine that has been fed thereinto to, for example, -40°C or lower.

The tank 4 stores the brine. In the tank 4, a first reservoir chamber 12 and a second reservoir chamber 14 are provided. The first reservoir chamber 12 stores the cooled brine that has been discharged from the cooler 2. The second reservoir chamber 14 stores the brine that has been subjected to heat exchange and discharged from the heat exchanger 10.

The first reservoir chamber 12 is connected through a pipe 18 to the discharge portion 2b of the cooler 2, while connected through a pipe 20 to a supply header 28, as described below, of the heat exchanger 10. The second reservoir chamber 14 is connected through a pipe 22 to a discharge header 30, as described below, of the heat exchanger 10, while connected through a pipe 24 to the feeding portion 2a of the cooler 2.

A partition wall 16 is provided between the first reservoir chamber 12 and the second reservoir chamber 14. This partition wall 16 prevents the brine that has been cooled and is stored in the first reservoir chamber 12 and the brine that has been subjected to heat exchange and is stored in the second reservoir chamber 14 from being mixed with each other. Moreover, the partition wall 16 is made of a high heat-insulating material. The partition wall 16 prevents heat exchange between the brine stored in the first reservoir chamber 12 and the brine stored in the second reservoir chamber 14 from occurring.

The first pump 6 is provided to the pipe 20 connected to a feed-out portion of the first reservoir chamber 12. The first pump 6 sucks the brine stored in the first reservoir chamber 12 while delivering the same to the heat exchanger 10. This first pump 6 is configured to be capable of changing a flow rate of delivering the brine per unit time (hereinafter simply referred to as delivery flow rate). The first pump 6 receives a control signal from the control unit 58 as described below. The first pump 6 changes the flow rate of delivering the brine in accordance with the received control signal. In other words, when the received control signal indicates an increase of the delivery flow rate, the first pump 6 increases the flow rate of delivering the brine per unit time in accordance with this indication, while, when the received control signal indicates a decrease of the delivery flow rate, the first pump 6 decreases the flow rate of delivering the brine per unit time in accordance with this indication.

The second pump 8 is provided to the pipe 24 connected to a feed-out portion of the second reservoir chamber 14. The second pump 8 sucks the brine stored in the second reservoir chamber 14 while delivering the same to the feeding portion 2a of the cooler 2. This second pump 8 is configured to be capable of changing the flow rate of delivering the brine per unit time.

The heat exchanger 10 allows the hydrogen gas that has been compressed by the compressor 100 to have a high pressure to be subjected to heat exchange with the low-temperature brine, thereby cooling the hydrogen gas. This heat exchanger 10 includes a multitude of microchannels (fine flow passages). The heat exchanger 10 is a so-called microchannel heat exchanger in which, while fluids are allowed to respectively flow through the microchannels, heat exchange among the fluids is performed.

The heat exchanger 10 includes a stacked body 26 in the interior of which a multitude of flow passages are provided, the supply header 28 for supplying the brine to second flow passages 34, as described below, in the stacked body 26, and the discharge header 30 for discharging the brine from the second flow passages 34 as described below.

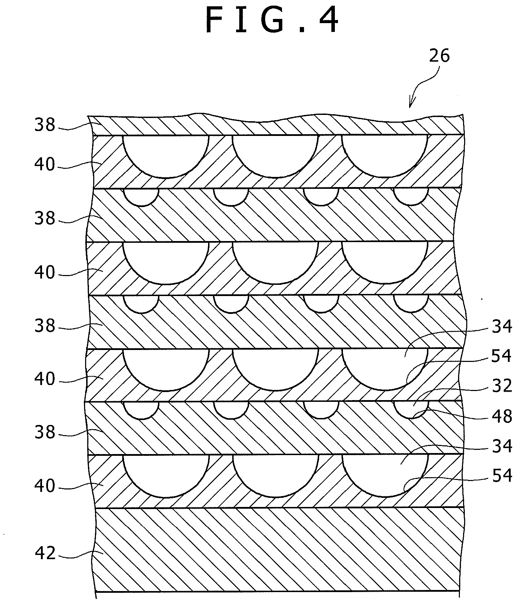

The stacked body 26 has a rectangular parallelepiped external shape. In the interior of the stacked body 26, a multitude of first flow passages 32 and the multitude of second flow passages 34 are provided as illustrated in Fig. 4. Each of the first flow passages 32 and each of the second flow passages 34 are microchannels (fine flow passages). The first flow passages 32 allow the hydrogen gas to flow. The second flow passages 34 allow the brine for cooling the hydrogen gas to flow.

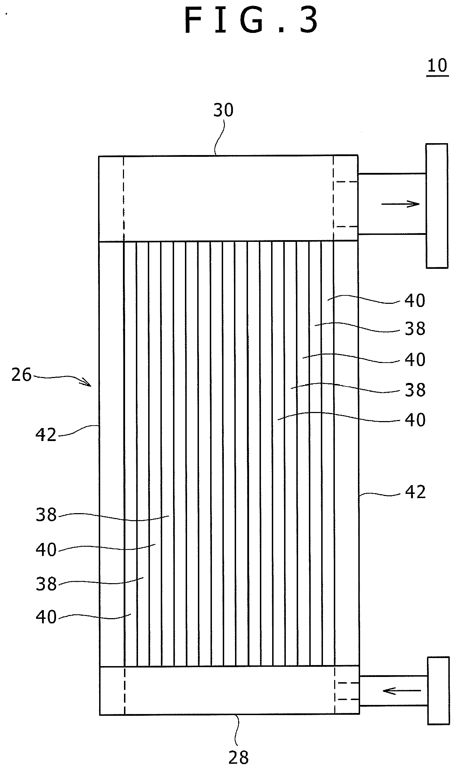

The stacked body 26 is made of a plurality of first base plates 38, a plurality of second base plates 40, and a pair of end plates 42, as illustrated in Fig. 3. Specifically, the first base plates 38 and the second base plates 40 are alternately stacked upon one another, and upon both ends in a stacking direction thereof, the pair of end plates 42 are separately stacked, whereby the stacked body 26 is formed. In the stacked body 26, the second base plates 40 are stacked upon corresponding both sides in a thickness direction of the first base plates 38. The plurality of first flow passages 32 are arranged in each of the first base plates 38. The plurality of second flow passages 34 are arranged in each of the second base plates 40. Each of the base plates 38, 40 is a thin flat plate made of, for example, stainless steel, or the like. The stacked base plates 38, 40 are integrally formed by diffusion bonding plate surfaces thereof together that are in contact with each other. Note that the first base plates 38 are an example of first layers of the present invention. The second base plates 40 are an example of second layers of the present invention.

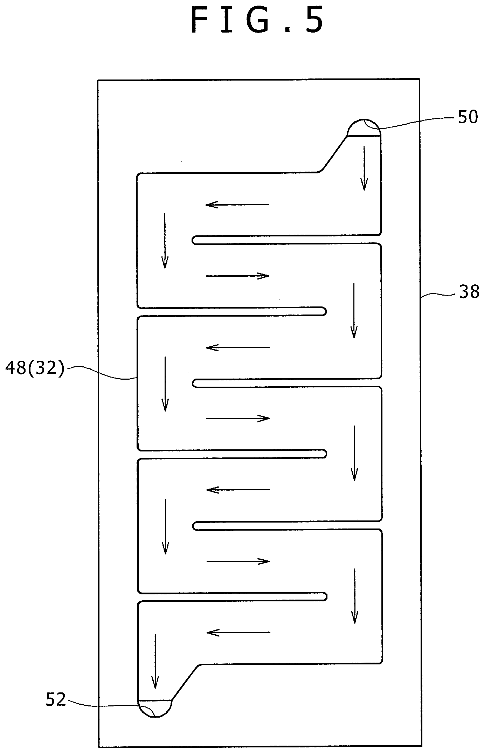

In one of the plate surfaces in the thickness direction of each of the first base plates 38 (see Fig. 5), a plurality of first flow passage groove portions 48 for forming the plurality of first flow passages 32 are formed. Note that Fig. 5 illustrates an external shape of the entirety of each of the plurality of first flow passage groove portions 48 formed in each of the first base plates 38. In other words, in Fig. 5, illustration of each of the first flow passage groove portions 48 is omitted, but, in practice, the plurality of first flow passage groove portions 48 are arranged parallel to each other in the external shape as illustrated in Fig. 5. Openings of the plurality of first flow passage groove portions 48 formed in the one of the plate surfaces of each of the first base plates 38 are sealed by one of the second base plates 40 that is stacked on this plate surface. The plurality of first flow passage groove portions 48 in which these openings are sealed form the plurality of first flow passages 32 that are arranged on one of plate surface sides of each of the first base plates 38 while lying along this one of the plate surfaces.

A first inflow port 50 of each of the first flow passages 32 is formed at a location that is adjacent to one end of the stacked body 26 in a longitudinal direction of the first base plates 38 (adjacent to an upper end of the stacked body 26) while adjacent to one end of the stacked body 26 in a width direction of the first base plates 38. This first inflow port 50 is a portion for receiving the hydrogen gas. The first inflow port 50 is made of a through hole that penetrates each of the base plates 38, 40 and one of the pair of end plates 42 at the same location in the thickness direction to communicate therewith. Thereby, the first inflow port 50 continues in the stacking direction of the base plates 38, 40 and is a hole that opens at a plate surface of the one of the end plates 42 at a front side. Moreover, the plurality of first flow passages 32 formed in each of the first base plates 38 are all connected to this first inflow port 50. In other words, the first inflow port 50 is a feeding port of the hydrogen gas that is common to all the first flow passages 32 provided in the stacked body 26.

A first feed-out port 52 of each of the first flow passages 32 is formed at a location that is adjacent to an end portion of the stacked body 26 at a side opposite to the first inflow port 50 in the longitudinal direction and the width direction of the first base plates 38. This first feed-out port 52 is a portion for discharging the hydrogen gas that has flown through each of the first flow passages 32. Similarly to the first inflow port 50, the first feed-out port 52 is made of a through hole that penetrates each of the base plates 38, 40 and the one of the end plates 42 at the same location in the thickness direction to communicate therewith. Moreover, similarly to the first inflow port 50, the first feed-out port 52 is a discharge port of the hydrogen gas that is common to all the first flow passages 32 provided in the stacked body 26.

Each of the first flow passages 32 has a meandering shape in which a portion that linearly extends from one side to the other side in the width direction of the first base plates 38 and a portion folded back therefrom that linearly extends from the other side to the one side in the width direction of the first base plates 38 are repeatedly provided between the first inflow port 50 and the first feed-out port 52.

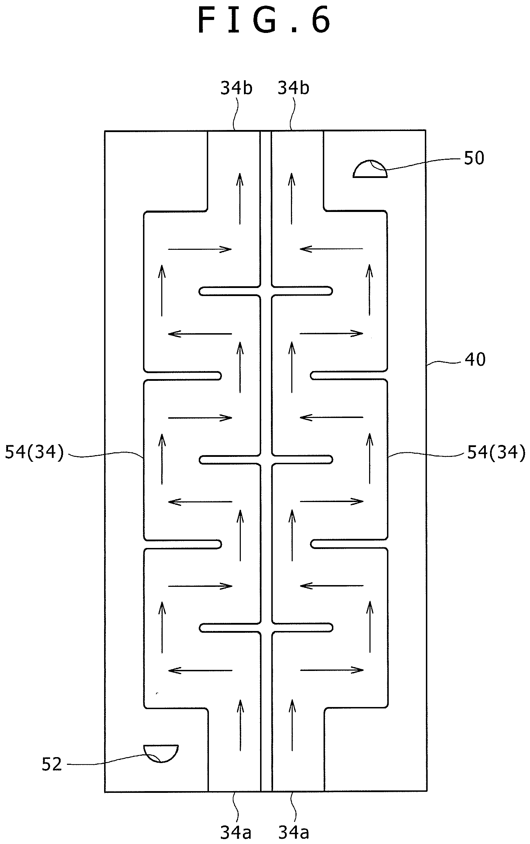

In one of plate surfaces in a thickness direction of each of the second base plates 40 (see Fig. 6), a plurality of second flow passage groove portions 54 for forming the plurality of second flow passages 34 are formed. Note that, similarly to Fig. 5, Fig. 6 illustrates an external shape of the entirety of each of the plurality of second flow passage groove portions 54 formed in each of the second base plates 40. In other words, in Fig. 6, illustration of each of the second flow passage groove portions 54 is omitted, but, in practice, the plurality of second flow passage groove portions 54 are arranged parallel to each other in the external shape as illustrated in Fig. 6. Openings of the plurality of second flow passage groove portions 54 formed in the one of the plate surfaces of each of the second base plates 40 are sealed by one of the first base plates 38 that is stacked on this plate surface. The plurality of second flow passage groove portions 54 in which these openings are sealed form the plurality of second flow passages 34 that are arranged on one of plate surface sides of each of the second base plates 40 while lying along this one of the plate surfaces.

The plurality of second flow passages 34 formed in each of the second base plates 40 are separated into two lines. Specifically, these plurality of second flow passages 34 are made of the second flow passages 34 of one group that are arranged, in view of the center in a width direction of the second base plates 40, on one side in the width direction thereof and the second flow passages 34 of the other group that are arranged, in view of the center in the width direction of the second base plates 40, on the other side in the width direction thereof. Each of the second flow passages 34 of the one group has a meandering shape in which a portion that linearly extends from a center side in the width direction of the second base plates 40 to an edge side on the one side in the width direction of the second base plates 40 and a portion folded back therefrom that linearly extends to the center side in the width direction of the second base plates 40 are repeatedly provided. Moreover, each of the second flow passages 34 of the other group has such a meandering shape as to be symmetrical to the second flow passages 34 of the one group with respect to the center in the width direction of the second base plates 40.

One end of each of the second flow passages 34 that are formed in the second base plates 40 opens at an end surface on one side in a longitudinal direction of the stacked body 26 that lies along a longitudinal direction of the second base plates 40, specifically at the end surface on a side on which the first feed-out port 52 is disposed. An opening of each of these second flow passages 34 at the one end is a second inflow port 34a that receives the brine. The second inflow port 34a is an example of an inflow port of each of the second flow passages of the present invention. An end portion of each of the second flow passages 34 at a side opposite to the second inflow port 34a that are formed in the second base plates 40 opens at an end surface on the other side in the longitudinal direction of the stacked body 26 that lies along the longitudinal direction of the second base plates 40, specifically at the end surface on a side on which the first inflow port 50 is disposed. An opening of each of these second flow passages 34 at the opposite side is a second feed-out port 34b that discharges the brine that has flown through each of the second flow passages 34. The second feed-out port 34b is an example of a feed-out port of each of the second flow passages of the present invention.

In the stacked body 26 configured as described above, a formation region of portions of the plurality of first flow passages 32 arranged on one of the plate surface sides of the first base plates 38 that linearly extend in the width direction of the first base plates 38 and a formation region of portions of the plurality of second flow passages 34 arranged on one of the plate surface sides of the second base plates 40 that linearly extend in the width direction of the second base plates 40 corresponds to each other in such a manner as to overlap with each other in view of the stacking direction of the base plates 38, 40. Moreover, the heat exchanger 10 (stacked body 26) is configured such that the first inflow port 50 and the second feed-out ports 34b are positioned upward while the first feed-out port 52 and the second inflow ports 34a are positioned downward, and the longitudinal direction of the stacked body 26 (longitudinal direction of each of the base plates 38, 40) corresponds to an upward/downward direction. In other words, in the stacked body 26 of the heat exchanger 10, the first inflow port 50 and the first feed-out port 52 of each of the first flow passages 32 are disposed such that the hydrogen gas that is fed from the first inflow port 50 into each of the first flow passages 32 and flows through each of the first flow passages 32 toward the first feed-out port 52 generally moves from upward to downward in a vertical direction orthogonal to the stacking direction of the first base plates 38 and the second base plates 40. Meanwhile, the second inflow ports 34a and the second feed-out ports 34b of the corresponding second flow passages 34 are disposed such that the brine that is fed from the second inflow ports 34a into the corresponding second flow passages 34 and flows through the corresponding second flow passages 34 toward the second feed-out ports 34b generally moves from downward to upward in the vertical direction.

The supply header 28 is attached to the end surface of the stacked body 26 in which the second inflow ports 34a are formed. The pipe 20 (see Fig. 1) is connected to the supply header 28. The brine that has been delivered from the first pump 6 is supplied through the pipe 20 to the supply header 28. An interior space through which the supplied brine passes is provided in the supply header 28. This interior space communicates with all the second inflow ports 34a of the second flow passages 34 provided in the stacked body 26 while the supply header 28 is attached to the stacked body 26. In other words, the brine that has been supplied to the supply header 28 is distributed from the interior space of the supply header 28 to the second inflow ports 34a of the corresponding second flow passages 34 and fed thereinto.

The discharge header 30 is attached to the end surface of the stacked body 26 in which the second feed-out ports 34b are formed. The pipe 22 (see Fig. 1) is connected to the discharge header 30. An interior space is provided in the discharge header 30. This interior space communicates with all the second feed-out ports 34b of the second flow passages 34 provided in the stacked body 26 while the discharge header 30 is attached to the stacked body 26. The brine that has flown through each of the second flow passages 34 flows out from the second feed-out ports 34b of the corresponding second flow passages 34 into the interior space of the discharge header 30, and is discharged from the interior space to the pipe 22.

Moreover, the heat exchanger 10 of the cooling system according to this embodiment has a configuration, such as a shape, a size, and the number of the flow passages 32, 34, and the number of stacked layers of the base plates 38, 40 forming the stacked body 26, that is designed in such a manner as to satisfy a relationship of Formula (1) below. In Formula (1) below, an amount of heat exchange required for the heat exchanger 10 is Q (kW), an overall heat transfer coefficient that is a value relative to the configuration of the heat exchanger 10 is U (kW/m$^2 \cdot$ °C), a heat transfer area in the heat exchanger 10 is A (m$^2$), and a logarithmic mean temperature determined based on the temperature of the brine at the second inflow ports 34a of the second flow passages 34 and the temperature of the brine at the second feed-out ports 34b of the second flow passages 34 is dT (°C).

$$Q = U \times A \times dT \qquad (1)$$

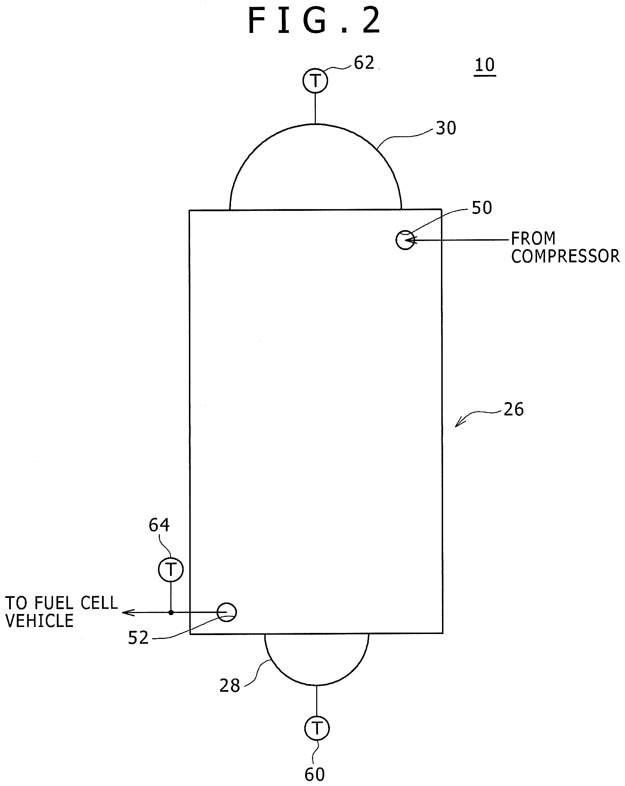

The second inflow port temperature detection portion 60 (see Figs. 1 and 2) is connected to the supply header 28. The second inflow port temperature detection portion 60 is a detector for detecting the temperature of the brine fed into the second inflow ports 34a of the second flow passages 34. In other words, the second inflow port temperature detection portion 60 detects the temperature of the brine at the second inflow ports 34a.

The second feed-out port temperature detection portion 62 (see Figs. 1 and 2) is connected to the discharge header 30. The second feed-out port temperature detection portion 62 is a detector for detecting the temperature of the brine discharged from the second feed-out ports 34b of the second flow passages 34. In other words, the second feed-out port temperature detection portion 62 detects the temperature of the brine at the second feed-out ports 34b.

The first feed-out port temperature detection portion 64 (see Figs. 1 and 2) is connected to the first feed-out port 52 of the first flow passages 32. The first feed-out port temperature detection portion 64 is a detector for detecting a temperature of the hydrogen gas discharged from the first feed-out port 52. In other words, the first feed-out port temperature detection portion 64 detects the temperature of the hydrogen gas at the first feed-out port 52.

The second inflow port temperature detection portion 60, the second feed-out port temperature detection portion 62, and the first feed-out port temperature detection portion 64 transmit data of detected temperatures to the control unit 58 respectively. The control unit 58 controls the temperature of the brine flowing through each of the second flow passages 34. Based on the received data of each of the detected temperatures, the control unit 58 controls an operation of the cooler 2 while controlling the flow rate of the brine delivered from the first pump 6, thereby controlling the temperature of the brine flowing through each of the second flow passages 34. The control unit 58 controls the operation of the cooler 2 while controlling the flow rate of the brine delivered from the first pump 6 such that the temperature of the brine at the second feed-out ports 34b is higher than the temperature of the hydrogen gas at the first feed-out port 52.

Next, the hydrogen gas cooling method according to this embodiment will be described.

In the hydrogen gas cooling method according to this embodiment, the cooling system as described above is prepared. Then, the cooler 2 (see Fig. 1) allows the brine to be subjected to heat exchange with a low-temperature refrigerant, thereby cooling the brine. The cooled brine is delivered from the discharge portion 2b through the pipe 18 to the first reservoir chamber 12 of the tank 4. The brine that has been fed into the first reservoir chamber 12 is temporarily stored in the first reservoir chamber 12 while discharged to the pipe 20 due to a suction force of the first pump 6. The brine that has been discharged to the pipe 20 is delivered by the first pump 6 to the heat exchanger 10, and fed through the interior space of the supply header 28 (see Figs. 2 and 3) into each of the second flow passages 34 in the stacked body 26 (see Fig. 6) from the second inflow ports 34a thereof.

Based on data of the detected temperature received from the second inflow port temperature detection portion 60, the control unit 58 controls the operation (cooling force) of the cooler 2 for cooling the brine such that the temperature of the brine at the second inflow ports 34a is -40°C. Specifically, the control unit 58 allows the cooler 2 to adjust the temperature of the refrigerant such that the detected temperature of the second inflow port temperature detection portion 60 is -40°C, thereby controlling the cooling force of this cooler 2. In detail, when the detected temperature of the second inflow port temperature detection portion 60 is above -40°C, the control unit 58 transmits to the cooler 2 the control signal indicating an increase of the cooling power, and the cooler 2 that has received this control signal increases the cooling power in accordance with this control signal. Consequently, the temperature of the brine at the second inflow ports 34a that is detected by the second inflow port temperature detection portion 60 decreases close to -40°C. On the other hand, when the detected temperature of the second inflow port temperature detection portion 60 is below -40°C, the control unit 58 transmits to the cooler 2 the control signal indicating a decrease of the cooling power, and the cooler 2 that has received this control signal decreases the cooling power in accordance with this control signal. Consequently, the temperature of the brine at the second inflow ports 34a that is detected by the second inflow port temperature detection portion 60 increases close to -40°C.

The brine that has been fed into each of the second flow passages 34 flows from the second inflow ports 34a toward the second feed-out ports 34b through these second flow passages 34. The brine that flows through each of these second flow passages 34 generally moves from downward to upward in the vertical direction orthogonal to the stacking direction of the base plates 38, 40 of the stacked body 26.

Meanwhile, the compressor 100 (see Fig. 1) compresses the hydrogen gas. The compressed high-pressure hydrogen gas is fed from the compressor 100 into the first inflow port 50 of the heat exchanger 10. The hydrogen gas fed into this first inflow port 50 is compressed in the compressor 100 and then cooled by cooling water to have a temperature of 40°C. Then, the hydrogen gas that has been fed into the first inflow port 50 is distributed to each of the first flow passages 32 in the stacked body 26 (see Fig. 5) to be supplied. The hydrogen gas that has been supplied to each of the first flow passages 32 flows through these first flow passages 32 from a side of the first inflow port 50 toward the first feed-out port 52, and generally moves from upward to downward in the vertical direction. In this process, heat exchange between the hydrogen gas flowing through each of the first flow passages 32 (see Fig. 4) and the brine flowing through the second flow passages 34 adjacent to these first flow passages 32 (see Fig. 4) is performed through a portion of the stacked body 26 that is positioned between both these flow passages 32, 34. Thereby, the hydrogen gas is cooled. Meanwhile, the temperature of the hydrogen gas gradually decreases as the hydrogen gas flows toward downstream of each of the first flow passages 32 (toward the first feed-out port 52). Consequently, the temperature of the hydrogen gas at the first feed-out port 52 comes to -37°C.

On the other hand, the temperature of the brine gradually increases as the brine flows toward downstream of each of the second flow passages 34 (toward the second feed-out ports 34b). The rate of the temperature increase of the brine at this time differs depending on the temperature and the flow rate of the brine fed into the second flow passages 34. In this embodiment, the control unit 58 controls the flow rate of delivering the brine fed into each of the second flow passages 34, namely the flow rate in which the first pump 6 delivers the brine such that the temperature of the brine at the second feed-out ports 34b is higher than the temperature of the hydrogen gas at the first feed-out port 52 (-37°C) while the temperature of the brine at the second feed-out ports 34b is higher by at least 10°C than the temperature of the brine at the second inflow ports 34a (-40°C). Specifically, the control unit 58 controls the flow rate of delivering the brine through the first pump 6 to such a flow rate that the temperature of the brine at the second feed-out ports 34b is -30°C.

At this time, the control unit 58 controls the flow rate of delivering the brine through the first pump 6 based on data of the detected temperature received from the first feed-out port temperature detection portion 64, data of the detected temperature received from the second inflow port temperature detection portion 60, and data of the detected temperature received from the second feed-out port temperature detection portion 62.

Specifically, when the detected temperature of the first feed-out port temperature detection portion 64 and the detected temperature of the second feed-out port temperature detection portion 62 are compared with each other, and the detected temperature of the second feed-out port temperature detection portion 62 is lower than or equal to the detected temperature of the first feed-out port temperature detection portion 64, the control unit 58 allows the first pump 6 to decrease the flow rate of delivering the brine until the detected temperature of the second feed-out port temperature detection portion 62 is higher than the detected temperature of the first feed-out port temperature detection portion 64. At this time, the control unit 58 transmits to the first pump 6 the control signal indicating a decrease of the delivery flow rate, and the first pump 6 decreases the flow rate of delivering the brine in accordance with the received control signal.

Meanwhile, when the detected temperature of the second feed-out port temperature detection portion 62 is higher than the detected temperature of the second inflow port temperature detection portion 60, and a difference in temperature between the detected temperature of the second feed-out port temperature detection portion 62 and the detected temperature of the second inflow port temperature detection portion 60 is less than 10°C, the control unit 58 allows the first pump 6 to decrease the flow rate of delivering the brine until this difference in temperature is 10°C or more. Also at this time, the control unit 58 transmits to the first pump 6 the control signal indicating a decrease of the delivery flow rate, thereby allowing the first pump 6 to decrease the flow rate of delivering the brine.

Meanwhile, at this time, the control unit 58 controls the flow rate of delivering the brine through the first pump 6 such that the detected temperature of the second feed-out port temperature detection portion 62 is -30°C. In other words, when the detected temperature of the second feed-out port temperature detection portion 62 is below -30°C, the control unit 58 transmits to the first pump 6 the control signal indicating a decrease of the delivery flow rate, and the first pump 6 decreases the flow rate of delivering the brine in accordance with the received control signal. Meanwhile, when the detected temperature of the second feed-out port temperature detection portion 62 is above -30°C, the control unit 58 transmits to the first pump 6 the control signal indicating an increase of the delivery flow rate, and the first pump 6 increases the flow rate of delivering the brine in accordance with the received control signal.

The hydrogen gas that has been cooled is discharged through the first feed-out port 52 of each of the first flow passages 32 (see Figs. 2 and 5) and supplied to the fuel cell vehicle 90 (see Fig. 1). On the other hand, the brine that has been subjected to heat exchange is discharged from the second feed-out ports 34b of the corresponding second flow passages 34 through the interior space of the discharge header 30 to the pipe 22 (see Fig. 1) while fed through this pipe 22 into the second reservoir chamber 14 of the tank 4 and stored. The brine that has been subjected to heat exchange and is stored in the second reservoir chamber 14 is sucked by the second pump 8 through the pipe 24 while delivered to the cooler 2, and fed from the feeding portion 2a thereof into the cooler 2. The brine that has been subjected to heat exchange and is fed into the cooler 2 is cooled again and supplied from the cooler 2 to the heat exchanger 10.

In the manner as described above, the hydrogen gas cooling method according to this embodiment is performed.

In this embodiment, the hydrogen gas is cooled through heat exchange in the stacked body 26 of the heat exchanger 10 between the hydrogen gas flowing through each of the first flow passages 32 that are microchannels and the brine flowing through each of the second flow passages 34 that are microchannels. Accordingly, a heat transfer efficiency of the hydrogen gas per unit volume of the brine is enhanced so that a hydrogen gas cooling efficiency can be enhanced.

Moreover, the temperature of the hydrogen gas flowing through the first flow passages 32 decreases as the hydrogen gas flows downstream, and the temperature of the brine flowing through the second flow passages 34 increases as the brine flows downstream, namely toward the first inflow port 50 of the first flow passages 32. In this embodiment, the hydrogen gas flowing through each of the first flow passages 32 generally moves from upward to downward while the brine flowing through each of the second flow passages 34 generally moves from downward to upward so that, as the hydrogen gas flows downstream of the first flow passages 32, the hydrogen gas is allowed to be subjected to heat exchange with the further low-temperature brine upstream of the second flow passages 34. Thus, the hydrogen gas cooling efficiency can be further enhanced.

Further, in this embodiment, the temperature and the flow rate of the brine fed into each of the second flow passages 34 are controlled such that the temperature of the brine at the second feed-out ports 34b of the second flow passages 34 is higher than the temperature of the hydrogen gas at the first feed-out port 52 of the first flow passages 32. Accordingly, compared with a case in which the temperature of the brine at the second feed-out ports 34b of the second flow passages 34 is lower than or equal to the temperature of the hydrogen gas at the first feed-out port 52 of the first flow passages 32, cold heat per brine flow rate (unit volume) that is provided from the brine to the hydrogen gas in the heat exchanger 10 is greater so that the hydrogen gas can be further effectively cooled.

As described above, in this embodiment, the hydrogen gas cooling efficiency can be enhanced so that, even if an amount of use of the brine is reduced, or if the brine is not excessively cooled to a low temperature, the hydrogen gas can be sufficiently cooled.

Moreover, in this embodiment, the multitude of first flow passages 32 that are microchannels and the multitude of second flow passages 34 that are microchannels can be accumulated in the stacked body 26 of the heat exchanger 10. Accordingly, the heat exchanger 10 is designed to be downsized while an amount of hydrogen gas cooling treatment can be sufficiently ensured.

Thus, in this embodiment, an amount of use of the brine that is used for cooling the hydrogen gas is reduced, an increase of an energy required for cooling the brine in the cooler 2 (energy required for cooling the refrigerant) can be suppressed and the hydrogen gas can be sufficiently cooled, while the heat exchanger 10 is downsized and, at the same time, an amount of hydrogen gas cooling treatment is ensured. Moreover, in this embodiment, an amount of use of the brine can be reduced, whereby an energy required for driving the first pump 6 and the second pump 8 for circulating the brine between the cooler 2 and the heat exchanger 10 can be reduced.

Moreover, in this embodiment, each of the first flow passages 32 and each of the second flow passages 34 are formed to have a meandering shape. Accordingly, compared with a case in which, for example, these flow passages are formed to have a linear shape, the number of the flow passages 32, 34 provided per sheet of each of the base plates 38, 40 becomes small, but the length of each of the flow passages 32, 34 can be lengthened. Consequently, a heat transfer area of the first flow passages 32 and the second flow passages 34 in the stacked body 26 can be sufficiently ensured. Moreover, the number of the flow passages 32, 34 provided per sheet of each of the base plates 38, 40 becomes small, whereby, even when total flow rates of fluids allowed to flow through these flow passages 32, 34 are the same, the velocity of flow of the fluids flowing through each of the flow passages 32, 34, respectively, can be increased. Generally, if the velocity of flow of a fluid flowing through a flow passage increases, the turbulence of the fluid in the flow passage increases and consequently a heat transfer performance improves. Accordingly, in this embodiment, while the heat transfer area of the first flow passages 32 and the second flow passages 34 can be sufficiently ensured, increasing the velocity of flow of the hydrogen gas flowing through each of the first flow passages 32 and the velocity of flow of the brine flowing through each of the second flow passages 34 allows the heat transfer performance between these hydrogen gas and brine to improve. Thus, the hydrogen gas can be further effectively cooled.

Moreover, in this embodiment, the flow rate of the brine fed into each of the second flow passages 34 is controlled such that the temperature of the brine at the second feed-out ports 34b of the second flow passages 34 is higher by at least 10°C than the temperature of the brine at the second inflow ports 34a of the second flow passages 34. Accordingly, the cold heat that is provided from the brine flowing through the second flow passages 34 to the hydrogen gas flowing through the first flow passages 32 in the heat exchanger 10 can be sufficiently magnified. Consequently, the hydrogen gas cooling efficiency can be further enhanced.

Moreover, in this embodiment, the temperature of the brine fed into each of the second flow passages 34 is controlled such that the temperature of the brine at the second inflow ports 34a of the second flow passages 34 is -40°C. Accordingly, while hydrogen embrittlement of the stacked body 26 of the heat exchanger 10 is suppressed, the hydrogen gas can be sufficiently cooled. Specifically, it is known that if stainless steel that is a material of each of the base plates 38, 40 forming the stacked body 26 is in contact with a hydrogen gas while cooled to a low temperature below -40°C, hydrogen embrittlement becomes remarkable. Thus, as in this embodiment, the temperature of the brine fed into each of the second flow passages 34 is controlled such that the temperature of the brine at the second inflow ports 34a is -40°C, whereby the temperature of the stacked body 26 is -40°C or more and hydrogen embrittlement can be suppressed. Moreover, the brine of -40°C is fed into the second inflow ports 34a, whereby hydrogen embrittlement of the stacked body 26 can be suppressed while the hydrogen gas flowing through the first flow passages 32 can be sufficiently cooled.

Note that it should be understood that the embodiment disclosed herein is exemplary and not restrictive in all aspects. The scope of the present invention is defined not by the description of the above embodiment but by the claims, and includes equivalents of the claims and all modifications within the scope of the claims.

For example, as shapes of the first flow passages and the second flow passages, various shapes other than the above-described shape can be applied. For example, the first flow passages and the second flow passages are not limited to passages having a meandering shape in which folding backs are repeated as described above, but may be passages that linearly extend.

Moreover, the number of the first flow passages formed per first base plate and the number of the second flow passages formed per second base plate may be optionally determined. Moreover, the width and the cross-sectional shape of each of the first flow passages and the width and the cross-sectional shape of each of the second flow passages may be optionally determined.

Moreover, in the embodiment as described above, the first base plates in which the first flow passages are arranged and the second base plates in which the second flow passages are arranged are alternately stacked upon one another, to which the configuration of stacking layers is not limited. For example, two or more sheets of the second base plates in which the second flow passages that allow the brine to flow therethrough may be stacked upon one sheet of the first base plates in which the first flow passages that allow the hydrogen gas to flow therethrough.

Moreover, directions of the arrangement of the heat exchanger (stacked body) are not limited to the direction in which the longitudinal direction of the base plates corresponds to the upward/downward direction as described above. For example, the heat exchanger (stacked body) may be arranged in a direction in which the longitudinal direction of the base plates corresponds to the horizontal direction, otherwise in a slanted direction.

[Outline of Embodiment]

The embodiment as described above is summarized as below.

The hydrogen gas cooling method according to the above-described embodiment is a hydrogen gas cooling method using a brine that is a non-evaporative antifreeze, the method including: a preparation step of preparing a heat exchanger including a stacked body in which a first layer in which a plurality of first flow passages that are fine flow passages are arranged and a second layer in which a plurality of second flow passages that are fine flow passages are arranged are stacked upon one another; and a cooling step in which a hydrogen gas is allowed to flow through each of the first flow passages while a brine having a temperature lower than the hydrogen gas is allowed to flow through each of the second flow passages to perform heat exchange between the hydrogen gas flowing through the first flow passages and the brine flowing through the second flow passages, thereby cooling the hydrogen gas, in which, in the cooling step, the hydrogen gas is allowed to flow through each of the first flow passages such that the hydrogen gas flowing through each of the first flow passages moves from one side to the other side in a particular direction orthogonal to a stacking direction of the first layer and the second layer while the brine is allowed to flow through each of the second flow passages such that the brine flowing through each of the second flow passages moves from the other side to the one side in the particular direction, and a temperature and a flow rate of the brine fed into each of the second flow passages are controlled such that the temperature of the brine at a feed-out port of the second flow passages is higher than a temperature of the hydrogen gas at a feed-out port of the first flow passages.

In this hydrogen gas cooling method, the hydrogen gas is cooled through heat exchange in the stacked body of the heat exchanger between the hydrogen gas flowing through each of the first flow passages that are fine flow passages and the brine flowing through each of the second flow passages that are fine flow passages. Compared with conventional hydrogen gas cooling methods using heat exchange through a heat transfer medium filled into the filled bath and conventional hydrogen gas cooling methods using heat exchange between a refrigerant and a hydrogen gas in a dual pipe, a heat transfer efficiency of the hydrogen gas per unit volume of the brine is enhanced. Consequently, a hydrogen gas cooling efficiency per unit volume of the brine can be enhanced.

Moreover, the temperature of the hydrogen gas flowing through the first flow passages decreases as the hydrogen gas flows downstream, and the temperature of the brine flowing through the second flow passages increases as the brine flows downstream, namely toward the hydrogen gas inflow port of the first flow passages. In this hydrogen gas cooling method, the hydrogen gas is fed into each of the first flow passages and the brine is fed into each of the second flow passages such that the hydrogen gas flowing through each of the first flow passages moves from one side to the other side in a particular direction orthogonal to a stacking direction of each of the layers of the stacked body while the brine flowing through each of the second flow passages moves from the other side to the one side. Accordingly, as the hydrogen gas flows downstream through the first flow passages, the hydrogen gas is allowed to be subjected to heat exchange with the further low-temperature brine upstream of the second flow passages. Thus, the hydrogen gas cooling efficiency can be further enhanced.

Further, in this hydrogen gas cooling method, the temperature and the flow rate of the brine fed into each of the second flow passages are controlled such that the temperature of the brine at the feed-out port of the second flow passages is higher than the temperature of the hydrogen gas at the feed-out port of the first flow passages. Accordingly, compared with a case in which the temperature of the brine at the feed-out port of the second flow passages is lower than or equal to the temperature of the hydrogen gas at the feed-out port of the first flow passages, cold heat per brine flow rate (unit volume) that is provided from the brine to the hydrogen gas is greater. Consequently, the hydrogen gas can be further effectively cooled.

As described above, in this cooling method, the hydrogen gas cooling efficiency can be enhanced so that, even if an amount of use of the brine is reduced, or if the brine is not excessively cooled to a low temperature, the hydrogen gas can be sufficiently cooled.

Moreover, in this cooling method, the plurality of first flow passages that are fine flow passages and the plurality of second flow passages that are fine flow passages can be accumulated in the stacked body of the heat exchanger. Accordingly, the heat exchanger is designed to be downsized while an amount of hydrogen gas cooling treatment can be sufficiently ensured. Thus, in this cooling method, an amount of use of the brine that is used for cooling the hydrogen gas is reduced, an increase of an energy required for cooling the brine can be suppressed and the hydrogen gas can be sufficiently cooled, while the heat exchanger is downsized and, at the same time, an amount of hydrogen gas cooling treatment is ensured.

In the hydrogen gas cooling method as described above, preferably, in the preparation step of preparing, as the heat exchanger, a heat exchanger including, as the stacked body, a stacked body in an interior of which each of the first flow passages and each of the second flow passages are formed to each have a meandering shape, and in the cooling step, the hydrogen gas is allowed to flow along the meandering shape of each of the first flow passages through each of the first flow passages, and the brine is allowed to flow along the meandering shape of each of the second flow passages through each of the second flow passages.

According to this configuration, compared with a case in which, for example, the flow passages are formed to have a linear shape, the number of the flow passages provided per layer becomes small, but the length of each of the flow passages can be lengthened. Accordingly, a heat transfer area of the first flow passages and the second flow passages in the stacked body can be sufficiently ensured. Moreover, the number of the flow passages provided per layer becomes small, whereby, even when total flow rates of fluids allowed to flow through these flow passages are the same, the velocity of flow of the fluids flowing through each of the flow passages, respectively, can be increased. Generally, if the velocity of flow of a fluid flowing through a flow passage increases, the turbulence of the fluid in the flow passage increases and consequently a heat transfer performance improves. Thus, in this configuration, while the heat transfer area of the first flow passages and the second flow passages can be sufficiently ensured, increasing the velocity of flow of the hydrogen gas flowing through each of the first flow passages and the velocity of flow of the brine flowing through each of the second flow passages allows the heat transfer performance between these hydrogen gas and brine to improve, and the hydrogen gas can be further effectively cooled.

In the hydrogen gas cooling method as described above, preferably, in the cooling step, the flow rate of the brine fed into each of the second flow passages is controlled such that the temperature of the brine at the feed-out port of the second flow passages is higher by at least 10°C than the temperature of the brine at an inflow port of the second flow passages.

According to this configuration, a specific condition of the feeding flow rate of the brine into each of the second flow passages in which the cold heat that is provided from the brine flowing through the second flow passages to the hydrogen gas flowing through the first flow passages in the stacked body of the heat exchanger can be sufficiently magnified can be set.

In the hydrogen gas cooling method as described above, preferably, in the cooling step, the temperature of the brine fed into each of the second flow passages is controlled such that the temperature of the brine at the inflow port of the second flow passages is -40°C.

According to this configuration, a temperature condition of the brine fed into each of the second flow passages in which while hydrogen embrittlement of the stacked body of the heat exchanger is suppressed, the hydrogen gas can be effectively cooled can be set.

The hydrogen gas cooling system according to the embodiment as described above is a hydrogen gas cooling system using a brine that is a non-evaporative antifreeze, preferably, the system including: a cooler that cools the brine; a heat exchanger that is connected to the cooler such that the brine circulates between the heat exchanger and the cooler, and allows a hydrogen gas to be subjected to heat exchange with the brine supplied from the cooler, thereby cooling the hydrogen gas; a pump that delivers the brine that has been cooled by the cooler from the cooler to the heat exchanger; and a control unit that controls a temperature of the brine, in which the heat exchanger includes a stacked body in which a first layer in which a plurality of first flow passages that are fine flow passages into which the hydrogen gas is fed and flows therethrough are arranged and a second layer in which a plurality of second flow passages that are fine flow passages into which the brine is fed and flows therethrough are arranged are stacked upon one another, and allows heat exchange between the hydrogen gas flowing through the first flow passages and the brine flowing through the second flow passages to be performed, each of the first flow passages includes a first inflow port that receives the hydrogen gas and a first feed-out port that discharges the hydrogen gas, and the first inflow port and the first feed-out port are disposed such that the hydrogen gas that is fed from the first inflow port into the first flow passages and flows through the first flow passages toward the first feed-out port moves from one side to the other side in a particular direction orthogonal to a stacking direction of the first layer and the second layer, each of the second flow passages includes a second inflow port that receives the brine and a second feed-out port that discharges the brine, and the second inflow port and the second feed-out port are disposed such that the brine that is fed from the second inflow port into the second flow passages and flows through the second flow passages toward the second feed-out port moves from the other side to the one side in the particular direction, and the control unit controls an operation of the cooler and a flow rate of the brine that the pump delivers, such that the temperature of the brine at the second feed-out port is higher than a temperature of the hydrogen gas at the first feed-out port.

In this hydrogen gas cooling system, similarly to the hydrogen gas cooling method as described above, an amount of use of the brine that is used for cooling the hydrogen gas is reduced, an increase of an energy required for cooling the brine can be suppressed and the hydrogen gas can be sufficiently cooled, while the heat exchanger is downsized and, at the same time, an amount of hydrogen gas cooling treatment is ensured.

Preferably, the hydrogen gas cooling system as described above further includes: a first feed-out port temperature detection portion that detects the temperature of the hydrogen gas at the first feed-out port; and a second feed-out port temperature detection portion that detects the temperature of the brine at the second feed-out port, in which based on the temperature detected by the first feed-out port temperature detection portion and the temperature detected by the second feed-out port temperature detection portion, the control unit controls the flow rate of the brine that the pump delivers.

In the hydrogen gas cooling system as described above, preferably, each of the first flow passages and each of the second flow passages are formed in the stacked body to each have a meandering shape.

According to this configuration, compared with a case in which, for example, the flow passages are formed to have a linear shape, the number of the flow passages provided per layer becomes small, but the length of each of the flow passages can be lengthened, and a heat transfer area of the first flow passages and the second flow passages in the stacked body can be sufficiently ensured. Moreover, the number of the flow passages provided per layer becomes small, whereby, even when total flow rates of fluids allowed to flow through these flow passages are the same, the velocity of flow of the fluids flowing through each of the flow passages, respectively, can be increased. Generally, if the velocity of flow of a fluid flowing through a flow passage increases, the turbulence of the fluid in the flow passage increases and consequently a heat transfer performance improves. Thus, in this configuration, while the heat transfer area of the first flow passages and the second flow passages can be sufficiently ensured, increasing the velocity of flow of the hydrogen gas flowing through each of the first flow passages and the velocity of flow of the brine flowing through each of the second flow passages allows the heat transfer performance between these hydrogen gas and brine to improve, and the hydrogen gas can be further effectively cooled.

In the hydrogen gas cooling system as described above, preferably, the control unit allows the pump to deliver the brine such that the brine flows through each of the second flow passages at such flow rate that the temperature of the brine at the second feed-out port is higher by at least 10°C than the temperature of the brine at the second inflow port.

According to this configuration, a flow rate of delivering the brine through the pump in which the cold heat that is provided from the brine flowing through the second flow passages to the hydrogen gas flowing through the first flow passages in the stacked body of the heat exchanger can be sufficiently magnified can be specifically set.

In the hydrogen gas cooling system as described above, preferably, the control unit controls a cooling force of the cooler such that the temperature of the brine at the inflow port of the second flow passages is -40°C.

According to this configuration, a temperature of cooling the brine through the cooler in which while hydrogen embrittlement of the stacked body of the heat exchanger is suppressed, the hydrogen gas can be effectively cooled can be specifically set.

As described above, according to the embodiment as described above, an amount of use of the brine that is used for cooling the hydrogen gas is reduced, an increase of an energy required for cooling the brine can be suppressed and the hydrogen gas can be sufficiently cooled, while the heat exchanger is downsized and, at the same time, an amount of hydrogen gas cooling treatment is ensured.

**Claims**

1. A hydrogen gas cooling method using a brine that is a non-evaporative antifreeze, the method comprising:

   a preparation step of preparing a heat exchanger (10) including a stacked body (26) in which a first layer (38) in which a plurality of first flow passages (32) that are fine flow passages are arranged and a second layer (40) in which a plurality of second flow passages (34) that are fine flow passages are arranged are stacked upon one another; and
   a cooling step in which a hydrogen gas is allowed to flow through each of the first flow passages while a brine having a temperature lower than the hydrogen gas is allowed to flow through each of the second flow passages to perform heat exchange between the hydrogen gas flowing through the first flow passages and the brine flowing through the second flow passages, thereby cooling the hydrogen gas, wherein
   in the cooling step, the hydrogen gas is allowed to flow through each of the first flow passages such that the hydrogen gas flowing through each of the first flow passages moves from one side to the other side in a particular direction orthogonal to a stacking direction of the first layer and the second layer while the brine is allowed to flow through each of the second flow passages such that the brine flowing through each of the second flow passages moves from the other side to the one side in the particular direction, and a temperature and a flow rate of the brine fed into each of the second flow passages are controlled such that the temperature of the brine at a feed-out port of the second flow passages is higher than a temperature of the hydrogen gas at a feed-out port of the first flow passages.

2. The hydrogen gas cooling method according to claim 1, wherein
   in the preparation step of preparing, as the heat exchanger, a heat exchanger including, as the stacked body, a stacked body in an interior of which each of the first flow passages and each of the second flow passages are formed to each have a meandering shape, and
   in the cooling step, the hydrogen gas is allowed to flow along the meandering shape of each of the first flow passages through each of the first flow passages, and the brine is allowed to flow along the meandering shape of each of the second flow passages through each of the second flow passages.

3. The hydrogen gas cooling method according to claim 1, wherein
   in the cooling step, the flow rate of the brine fed into each of the second flow passages is controlled such that the temperature of the brine at the feed-out port of the second flow passages is higher by at least 10°C than the temperature of the brine at an inflow port of the second flow passages.

4. A hydrogen gas cooling system using a brine that is a non-evaporative antifreeze, the system comprising:

   a cooler (2) that cools the brine;
   a heat exchanger (10) that is connected to the cooler such that the brine circulates between the heat exchanger and the cooler, and allows a hydrogen gas to be subjected to heat exchange with the brine supplied from the cooler, thereby cooling the hydrogen gas;
   a pump (6) that delivers the brine that has been cooled by the cooler from the cooler to the heat exchanger; and
   a control unit (58) that controls a temperature of the brine, wherein
   the heat exchanger includes a stacked body (26) in which a first layer (38) in which a plurality of first flow passages (32) that are fine flow passages into which the hydrogen gas is fed and flows therethrough are arranged and a second layer (40) in which a plurality of second flow passages (34) that are fine flow passages into which the brine is fed and flows therethrough are arranged are stacked upon one another, and allows heat exchange between the hydrogen gas flowing through the first flow passages and the brine flowing through the second flow passages to be performed,
   each of the first flow passages includes a first inflow port (50) that receives the hydrogen gas and a first feed-out port (52) that discharges the hydrogen gas, and the first inflow port and the first feed-out port are disposed such that the hydrogen gas that is fed from the first inflow port into the first flow passages and flows through the first flow passages toward the first feed-out port moves from one side to the other side in a particular direction orthogonal to a stacking direction of the first layer and the second layer, each of the second flow passages includes a second inflow port (34a) that receives the brine and a second feed-out port (34b) that discharges the brine, and the second inflow port and the second feed-out port are disposed such that the brine that is fed from the second inflow port into the second flow passages and flows through the second flow passages toward the second feed-out port moves from the other side to the one side in the particular direction, and
the control unit controls an operation of the cooler and a flow rate of the brine that the pump delivers, such that the temperature of the brine at the second feed-out port is higher than a temperature of the hydrogen gas at the first feed-out port.

5. The hydrogen gas cooling system according to claim 4, further comprising:

a first feed-out port temperature detection portion that detects the temperature of the hydrogen gas at the first feed-out port; and
a second feed-out port temperature detection portion that detects the temperature of the brine at the second feed-out port, wherein
based on the temperature detected by the first feed-out port temperature detection portion and the temperature detected by the second feed-out port temperature detection portion, the control unit controls the flow rate of the brine that the pump delivers.

6. The hydrogen gas cooling system according to claim 4, wherein
each of the first flow passages and each of the second flow passages are formed in the stacked body to each have a meandering shape.

7. The hydrogen gas cooling system according to claim 4, wherein
the control unit allows the pump to deliver the brine such that the brine flows through each of the second flow passages at such flow rate that the temperature of the brine at the second feed-out port is higher by at least 10°C than the temperature of the brine at the second inflow port.

**Patentansprüche**

1. Verfahren zur Kühlung von Wasserstoffgas unter Verwendung einer Sole, die ein nicht-verdampfendes Frostschutzmittel ist, wobei das Verfahren aufweist:

einen Vorbereitungsschritt zur Herstellung eines Wärmetauschers (10) mit einem gestapelten Körper (26), in dem eine erste Schicht (38), in der eine Vielzahl von ersten Strömungskanälen (32), die feine Strömungskanäle sind, angeordnet ist, und eine zweite Schicht (40), in der eine Vielzahl von zweiten Strömungskanälen (34), die feine Strömungskanäle sind, angeordnet ist, aufeinandergestapelt sind; und
einen Kühlungsschritt, bei dem ein Wasserstoffgas durch jeden der ersten Strömungskanäle strömen kann, während eine Sole mit einer Temperatur, die niedriger ist als die des Wasserstoffgases, durch jeden der zweiten Strömungskanäle strömen kann, um einen Wärmeaustausch zwischen dem Wasserstoffgas, das durch die ersten Strömungskanäle strömt, und der Sole, die durch die zweiten Strömungskanäle strömt, durchzuführen, wodurch das Wasserstoffgas gekühlt wird, wobei
in dem Kühlungsschritt das Wasserstoffgas durch jeden der ersten Strömungskanäle strömen kann, derart, dass das Wasserstoffgas, das durch jeden der ersten Strömungskanäle strömt, sich von einer Seite zu der anderen Seite in einer bestimmten Richtung senkrecht zu einer Stapelrichtung der ersten Schicht und der zweiten Schicht bewegt, während die Sole durch jeden der zweiten Strömungskanäle strömen kann, derart, dass die Sole, die durch jeden der zweiten Strömungskanäle strömt, sich von der anderen Seite zu der einen Seite in der jeweiligen Richtung bewegt, wobei eine Temperatur und eine Flussrate der Sole, die in jeden der zweiten Strömungskanäle zugeführt wird, derart gesteuert werden, dass die Temperatur der Sole an einem Auslassanschluss der zweiten Strömungskanäle höher ist als eine Temperatur des Wasserstoffgases an einem Auslassanschluss der ersten Strömungskanäle.

2. Verfahren zur Kühlung von Wasserstoffgas nach Anspruch 1, wobei
in dem Vorbereitungsschritt zur Herstellung als der Wärmetauscher ein Wärmetauscher hergestellt wird, der als den gestapelten Körper einen gestapelten Körper enthält, in dessen Innerem jeder der ersten Strömungskanäle und jeder der zweiten Strömungskanäle so ausgebildet ist, dass er jeweils eine mäanderförmige Form hat, und
in dem Kühlungsschritt das Wasserstoffgas entlang der mäanderförmigen Form jedes der ersten Strömungskanäle durch jeden der ersten Strömungskanäle strömen kann, und die Sole entlang der mäanderförmigen Form jedes der zweiten Strömungskanäle durch jeden der zweiten Strömungskanäle strömen kann.

3. Verfahren zur Kühlung von Wasserstoffgas nach Anspruch 1, wobei
in dem Kühlungsschritt die Strömungsgeschwindigkeit der in jeden der zweiten Strömungskanäle zugeführten Sole geregelt wird, so dass die Temperatur der Sole an dem Auslassanschluss der zweiten Strömungskanäle um mindestens 10°C höher ist als die Temperatur der Sole an einem Einlassanschluss der zweiten Strömungskanäle.

4. Wasserstoffgas-Kühlsystem unter Verwendung einer Sole, die ein nicht-verdampfendes Frostschutzmittel ist, wobei das System aufweist:

einen Kühler (2), der die Sole kühlt;
einen Wärmetauscher (10), der mit dem Kühler derart verbunden ist, dass die Sole zwischen dem Wärmetauscher und dem Kühler zirkuliert, und der ermöglicht, dass ein Wasserstoffgas einem Wärmeaustausch mit der von dem Kühler zugeführten Sole unterworfen wird, wodurch das Wasserstoffgas gekühlt wird;
eine Pumpe (6), die die vom Kühler abgekühlte Sole von dem Kühler zu dem Wärmetauscher fördert; und
eine Steuereinheit (58), die eine Temperatur der Sole regelt, wobei
der Wärmetauscher einen gestapelten Körper (26) aufweist, in dem eine erste Schicht (38), in der eine Vielzahl von ersten Strömungskanälen (32), die feine Strömungskanäle sind, in die das Wasserstoffgas eingespeist wird und durch die das Wasserstoffgas strömt, angeordnet ist, und eine zweite Schicht (40), in der eine Vielzahl von zweiten Strömungskanälen (34), die feine Strömungskanäle sind, in die die Sole eingespeist wird und durch die die Sole hindurchströmt, angeordnet ist, aufeinandergestapelt sind, und die Durchführung eines Wärmeaustauschs zwischen dem Wasserstoffgas, das durch die ersten Strömungskanäle strömt, und der Sole, die durch die zweiten Strömungskanäle strömt, ermöglicht, wobei
jeder der ersten Strömungskanäle einen ersten Einlassanschluss (50), der das Wasserstoffgas empfängt, und einen ersten Auslassanschluss (52), der das Wasserstoffgas abgibt, aufweist, und der erste Einlassanschluss und der erste Auslassanschluss angeordnet sind, derart, dass sich das Wasserstoffgas, das von dem ersten Einlassanschluss in die ersten Strömungskanäle eingespeist wird und durch die ersten Strömungskanäle in Richtung des ersten Auslassanschlusses strömt, von einer Seite zu der anderen Seite in einer bestimmten Richtung senkrecht zu einer Stapelrichtung der ersten Schicht bewegt,
jeder der zweiten Strömungskanäle einen zweiten Einlassanschluss (34a), der die Sole empfängt, und einen zweiten Auslassanschluss (34b), der die Sole abgibt, aufweist, und der zweite Einlassanschluss und der zweite Auslassanschluss angeordnet sind, derart, dass sich die Sole, die von dem zweiten Einlassanschluss in die zweiten Strömungskanäle eingespeist wird und durch die zweiten Strömungskanäle in Richtung des zweiten Auslassanschlusses strömt, von der anderen Seite zu der einen Seite in der jeweiligen Richtung bewegt, und
die Steuereinheit einen Betrieb des Kühlers und eine Flussrate der von der Pumpe geförderten Sole steuert, so dass die Temperatur der Sole am zweiten Auslassanschluss höher ist als die Temperatur des Wasserstoffgases am ersten Auslassanschluss.

5. Wasserstoffgas-Kühlsystem nach Anspruch 4, ferner mit:

einem ersten Auslassanschluss-Temperaturerfassungsabschnitt, der die Temperatur des Wasserstoffgases an dem ersten Auslassanschluss erfasst; und
einem zweiten Auslassanschluss-Temperaturerfassungsabschnitt, der die Temperatur der Sole an dem zweiten Auslassanschluss erfasst, wobei
basierend auf der Temperatur, die durch den ersten Auslassanschluss-Temperaturerfassungsabschnitt erfasst wird, und der Temperatur, die durch den zweiten Auslassanschluss-Temperaturerfassungsabschnitt erfasst wird, die Steuereinheit die Flussrate der durch die Pumpe geförderten Sole steuert.

6. Wasserstoffgas-Kühlsystem nach Anspruch 4, wobei
jeder der ersten Strömungskanäle und jeder der zweiten Strömungskanäle in dem gestapelten Körper zu jeweils einer mäanderförmigen Form geformt ist.

7. Wasserstoffgas-Kühlsystem nach Anspruch 4, wobei
die Steuereinheit es der Pumpe ermöglicht, die Sole zu fördern, derart, dass die Sole jeden der zweiten Strömungskanäle mit einer solchen Flussrate durchströmt, dass die Temperatur der Sole an dem zweiten Auslassanschluss um mindestens 10°C höher ist als die Temperatur der Sole an dem zweiten Einlassanschluss.

**Revendications**

1. Procédé de refroidissement d'hydrogène gazeux utilisant une saumure qui est un antigel non volatil, le procédé comprenant :

    une étape de préparation pour préparer un échangeur de chaleur (10) comprenant un corps empilé (26) dans lequel une première couche (38) dans laquelle une pluralité de premiers passages d'écoulement (32) qui sont de fins passages d'écoulement, sont agencés, et une seconde couche (40) dans laquelle une pluralité de seconds passages d'écoulement (34) qui sont de fins passages d'écoulement sont agencés, sont empilées l'une sur l'autre ; et
    une étape de refroidissement dans laquelle un hydrogène gazeux est autorisé à s'écouler à travers chacun des premiers passages d'écoulement alors qu'une saumure ayant une température inférieure à l'hydrogène gazeux est autorisée à s'écouler à travers chacun des seconds passages d'écoulement pour réaliser l'échange de chaleur entre l'hydrogène gazeux s'écoulant à travers les premiers passages d'écoulement et la saumure s'écoulant à travers les seconds passages d'écoulement, refroidissant ainsi l'hydrogène gazeux, dans lequel :

        à l'étape de refroidissement, l'hydrogène gazeux est autorisé à s'écouler à travers chacun des premiers passages d'écoulement de sorte que l'hydrogène gazeux s'écoulant à travers chacun des premiers passages d'écoulement se déplace d'un côté à l'autre, dans une direction particulière orthogonale à une direction d'empilement de la première couche et de la seconde couche, alors que la saumure est autorisée à s'écouler à travers chacun des seconds passages d'écoulement de sorte que la saumure s'écoulant à travers chacun des seconds passages d'écoulement se déplace d'un côté à l'autre dans la direction particulière, et une température et un débit de la saumure alimentée dans chacun des seconds passages d'écoulement sont contrôlés de sorte que la température de la saumure à un orifice de sortie des seconds passages d'écoulement est supérieure à une température de l'hydrogène gazeux à un orifice de sortie des premiers passages d'écoulement.

2. Procédé de refroidissement d'hydrogène gazeux selon la revendication 1, dans lequel :

        à l'étape de préparation pour préparer, en tant qu'échangeur de chaleur, un échangeur de chaleur comprenant, en tant que corps empilé, un corps empilé dans un intérieur duquel chacun des premiers passages d'écoulement et chacun des seconds passages d'écoulement sont formés pour avoir une forme de méandres, et
        à l'étape de refroidissement, l'hydrogène gazeux est autorisé à s'écouler le long de la forme de méandres de chacun des premiers passages d'écoulement à travers chacun des premiers passages d'écoulement, et la saumure est autorisée à s'écouler le long de la forme de méandres de chacun des seconds passages d'écoulement à travers chacun des seconds passages d'écoulement.

3. Procédé de refroidissement d'hydrogène gazeux selon la revendication 1, dans lequel :

        à l'étape de refroidissement, le débit de la saumure alimentée dans chacun des seconds passages d'écoulement est contrôlé de sorte que la température de la saumure à l'orifice de sortie des seconds passages d'écoulement est supérieure d'au moins 10 °C à la température de la saumure à un orifice d'entrée des seconds passages d'écoulement.

4. Système de refroidissement d'hydrogène gazeux utilisant une saumure qui est un antigel non volatil, le système comprenant :

        un dispositif de refroidissement (2) qui refroidit la saumure ;
        un échangeur de chaleur (10) qui est raccordé au dispositif de refroidissement de sorte que la saumure circule entre l'échangeur de chaleur et le dispositif de refroidissement, et permet à l'hydrogène gazeux d'être soumis à l'échange de chaleur avec la saumure fournie par le dispositif de refroidissement, refroidissant ainsi l'hydrogène gazeux ;
        une pompe (6) qui distribue la saumure qui a été refroidie par le dispositif de refroidissement, du dispositif de refroidissement à l'échangeur de chaleur ; et
        une unité de régulation (58) qui régule une température de la saumure, dans lequel :

            l'échangeur de chaleur comprend un corps empilé (26) dans lequel une première couche (38) dans laquelle est agencée une pluralité de premiers passages d'écoulement (32) qui sont de fins passages d'écoulement dans lesquels le l'hydrogène gazeux est alimenté et s'écoule à travers ces derniers, et une seconde couche (40) dans laquelle est agencée une pluralité de seconds passages d'écoulement (34) qui sont de fins passages d'écoulement dans lesquels la saumure est alimentée et s'écoule à travers ces derniers, sont empilées l'une sur l'autre, et permet de réaliser l'échange de chaleur entre l'hydrogène gazeux s'écoulant à travers les premiers passages d'écoulement et la saumure s'écoulant à travers les seconds passages d'écoulement,

chacun des premiers passages d'écoulement comprend un premier orifice d'entrée (50) qui reçoit l'hydrogène gazeux et un premier orifice de sortie (52) qui décharge l'hydrogène gazeux, et le premier orifice d'entrée et le premier orifice de sortie sont disposés de sorte que l'hydrogène gazeux qui est alimenté à partir du premier orifice d'entrée dans les premiers passages d'écoulement et s'écoule à travers les premiers passages d'écoulement vers le premier orifice de sortie se déplace d'un côté à l'autre dans une direction particulière orthogonale à une direction d'empilement de la première couche et de la seconde couche,

chacun des seconds passages d'écoulement comprend un second orifice d'entrée (34a) qui reçoit la saumure et un second orifice de sortie (34b) qui décharge la saumure, et

le second orifice d'entrée et le second orifice de sortie sont disposés de sorte que la saumure qui est alimentée du second orifice d'entrée dans les seconds passages d'écoulement et s'écoule à travers les seconds passages d'écoulement vers le second orifice de sortie, se déplace d'un côté à l'autre dans la direction particulière, et

l'unité de régulation régule une opération du dispositif de refroidissement et un débit de la saumure que la pompe délivre, de sorte que la température de la saumure au second orifice de sortie est supérieure à une température de l'hydrogène gazeux au premier orifice de sortie.

5. Système de refroidissement d'hydrogène gazeux selon la revendication 4, comprenant en outre :

une première partie de détection de température d'orifice de sortie qui détecte la température de l'hydrogène gazeux au premier orifice de sortie ; et
une seconde partie de détection de température d'orifice de sortie qui détecte la température de la saumure au second orifice de sortie, dans lequel :

en fonction de la température détectée par la première partie de détection de température d'orifice de sortie et de la température détectée par la seconde partie de détection de température d'orifice de sortie, l'unité de régulation régule le débit de la saumure que la pompe délivre.

6. Système de refroidissement d'hydrogène gazeux selon la revendication 4, dans lequel :

chacun des premiers passages d'écoulement et chacun des seconds passages d'écoulement sont formés dans le corps empilé pour avoir chacun une forme de méandres.

7. Système de refroidissement d'hydrogène gazeux selon la revendication 4, dans lequel :

l'unité de régulation permet à la pompe de délivrer la saumure de sorte que la saumure s'écoule à travers chacun des seconds passages d'écoulement à un débit tel que la température de la saumure au second orifice de sortie est supérieure d'au moins 10 °C à la température de la saumure au second orifice d'entrée.

# FIG.1

EP 3 029 406 B1

# FIG.2

# FIG.3

# F I G . 4

# FIG.5

# FIG.6

**EP 3 029 406 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014122890 A
- JP 2010121657 A
- JP 2011080495 A